# EUROPEAN PATENT SPECIFICATION

(11) **EP 1 382 578 B1**
(45) Date of publication and mention of the grant of the patent: **08.08.2007**
(21) Application number: 03077217.2
(22) Date of filing: 15.07.2003
(51) Int. Cl.: C02F 9/00, C02F 1/44

(54) **Method for the filtration of water and a water filtration device**
Verfahren zur Filtration von Wasser und Wasserfiltereinrichtung
Procédé pour la filtration d'eau et filtre à eau

(30) Priority: 15.07.2002 NL 1021082
(43) Date of publication of application: 21.01.2004
(73) Proprietor: van Rhee, Franciscus Wilhelmus Antonius, Neerpelt (BE)
(72) Inventor: van Rhee, Franciscus Wilhelmus Antonius, Neerpelt (BE)
(74) Representative: Kupecz, Arpad

(56) References cited:
- WO-A-94/13380
- DE-A- 4 430 764
- DE-A- 19 520 917
- PATENT ABSTRACTS OF JAPAN vol. 018, no. 437 (C-1238), 16 August 1994 (1994-08-16) & JP 06 134265 A (BESUTO KOGYO KK), 17 May 1994 (1994-05-17)

## Description

The present invention, relates to a method for the filtration of feed water as disclosed in claim 1. The invention also relates to a water purification device as disclosed in claim 7.

The purification of water in accordance with the method mentioned in the preamble is generally known in the art. Similarly, devices for the purification of water that are suitable, for example, for the above-mentioned method are also generally known in the art. A disadvantage of the known water purification system is that the heat generated by, for example, the pump and by the drive means is directly dissipated to the environment. For this reason the known installations must at all times be placed in a ventilated room. Another disadvantage is the noise production of the known purification systems. Both the pumps and the drive means generate much noise, which makes it necessary to take sound-damping measures.

WO 94/3380 discloses a water purification device for the purification of raw water.

DE 19 520 917 relates to a reverse osmose device as well as to a method and an apparatus for controlling the same.

It is the object of the present invention to provide an improved method and an improved device with which the drawbacks of the prior art systems are avoided. The object of the invention is in particular to provide an

improved method and an improved device with which the heat dissipation to the environment is reduced. Another particular object of the invention is to provide an improved method and an improved device with which the noise production can be reduced considerably.

In order to achieve at least one of the forementioned objectives, the invention provides a method as mentioned in the preamble and which is characterised in that the feed water is fed to the exterior of the pump for the purpose of cooling the pump. This makes it possible to place the pump into the feed water to be filtered so that heat is not dissipated to the environment but to the water to be filtered. Since the water to be filtered is conducted onward for use, the heat will not be dissipated directly to the immediate environment. This considerably reduces the heating of the atmosphere in the vicinity of the conduit means. An additional consequence of the invention is that the noise generation to the environment is significantly reduced since water has a very strongly damping effect. The noise reduction obtained with the method according to the invention is substantial. It is particularly preferred for the pump unit to be at least partly submerged in the feed water and to dissipate heat thereto. It is especially such an embodiment with which the advantages of the invention can be obtained in a particularly efficient manner.

The method is further characterised in that:
the pump unit is at least partly accommodated in a container that is at least partly filled with feed water,
the feed water consists at least partly of raw water that is fed to the container. Preferably,
the raw water is fed through a first filter for preliminary filtration of the raw water by eliminating larger dirt particles.

Such a first filter may be placed either before or after the pump unit. It is preferred for the first filter to be placed in a position before the pump unit. When tap water is subjected to a method according to the invention, such a first filter will ensure that the coarsest particles are removed from the water to be filtered before feeding to the final filter unit. It is particularly preferred for the filter unit to be formed by a reverse osmosis unit. Such a reverse osmosis unit is very suitable, for example, for completely or partly removing dissolved salts from the water.

Furthermore, the invention is characterised in that any gasses, such as air, in the container are removed by de-aeration. This ensures that the pump unit will at all times be below the feed water level. This provides effective cooling of the unit. Still another preferred embodiment of the method according to the invention is characterised in that the pump unit consists of an under water pump, which is entirely accommodated inside the container. In such an embodiment both the pump and its drive are placed in the feed water. In this manner both the dissipation of heat and the reduction of the noise produced is optimal.

According to still another preferred embodiment the method is characterised in that:
the operation of the pump unit is controlled by a control device connected with the pump unit,
the raw water pressure is measured by a raw-water pressostat (P1) connected with the control device and provided with a pre-set threshold value and
the pump unit can be switched on when the threshold value is exceeded and switched off when the threshold value is subceeded.

Especially preferred is a method that is characterised in that:
the operation of the pump unit is monitored by a control device connected with the pump unit,
the purified water pressure is measured by a purified-water pressostat (P3) connected with the control device and provided with a switch-on point at a lower discharge water pressure and a switch-off point at a higher discharge water pressure and
the pump unit is switched off by the control device when the threshold value of the higher purified water pressure is exceeded and switched on when the threshold value of the lower purified water pressure is subceeded.

Such a method is especially very suitable for using in a system wherein an expansion tank is employed for the storage of purified water.

If the filtered, purified water is stored in a storage tank instead of in an expansion tank, the method according to the invention is preferably characterised in that:
the operation of the pump unit is monitored by a control device connected with the pump unit,
the filtered water is fed into a purified water container, which is provided with two level sensors connected with the control device, which is provided with a switch-on point at a lowest purified water level and a switch-off point at a higher purified water level, and
the pump unit is switched off by the control device when exceeding the threshold value of the higher purified water level and switched on when subceeding the threshold value of the lowest purified water level.

The invention also relates to a water purification device for the purification of water according to claim 7.

Such a water purification device is especially, but not exclusively useful in the method according to the invention. With such a water purification device the objectives mentioned above can be realised.

According to a claim 7 the cooling provisions comprise at least one container, which surrounds the pump unit at least partly and can at least partly be filled with feed water. This affords the possibility to keep the pump unit completely or partly below the liquid level for the dissipation of heat and to reduce the noise production into the environment. It is then especially preferred for the holder to comprise a closed tank that is suitable to at least partly be filled with feed water.

The various terms used herein, such as raw water and feed water as well as purified water, recycling water and wastewater will be clarified by the specification and the drawings.

A further preferred embodiment entails raw-water pipe means through which raw water is fed to the container, and upstream from the container there is a first filter unit for the removal of larger dirt particles from the raw water by means of preliminary filtration of the raw water in the raw-water pipe means.

Further preferences regarding the invention are described in the remaining subclaims. The basis for these preferences is to be found in the following detailed description of preferred embodiments given with reference to the appended drawings.
Fig. 1 shows a schematic depiction of a water purification device with an expansion tank according to a first embodiment of the invention.
Fig. 2 shows the device according to Fig. 1 with the electrical wiring diagram.
Fig. 3 shows a second embodiment of the water purification according to the invention using a storage tank.
Fig. 4 shows the wiring diagram of the water purification device according to Fig. 3.
Figs. 5 to 5B show a number of embodiments of parts of the water purification device according to the invention.

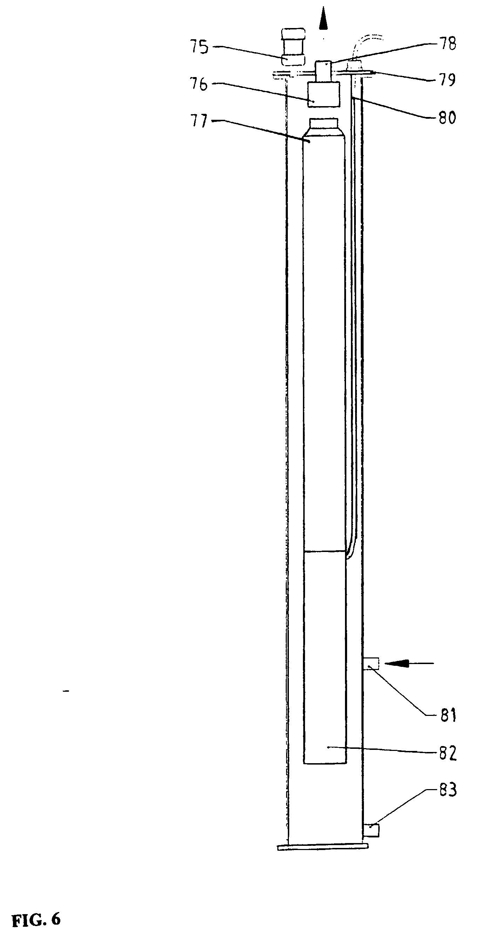

Fig. 6 shows a first embodiment of a container for use in a device according to the invention.

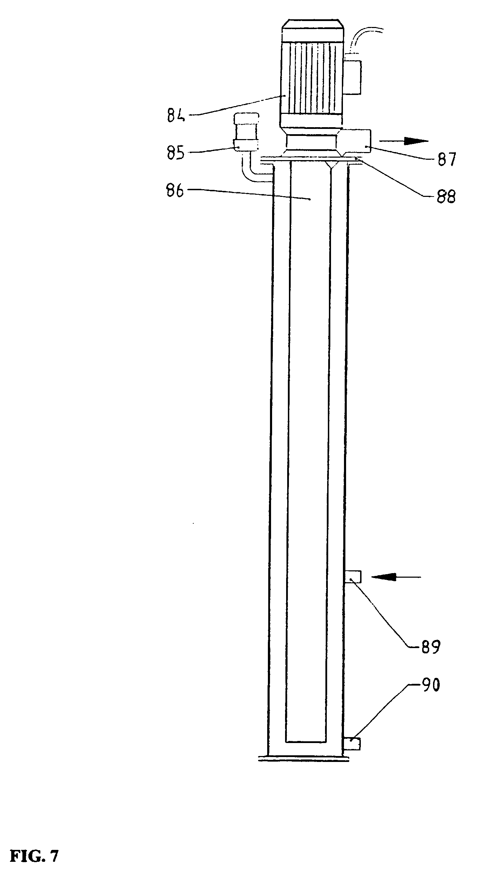

Fig. 7 shows a second embodiment of a container for use in the device according to the invention.

In the description of the figures following hereafter, the same or comparable parts are indicated with the same reference numbers. With the aid of the appended figures and the description of preferred embodiments given below, a person skilled in the art is able to perform further adjustments and adaptations, all within the scope of the invention. Any such embodiments that have not been explicitly described also fall within the scope of the present invention.

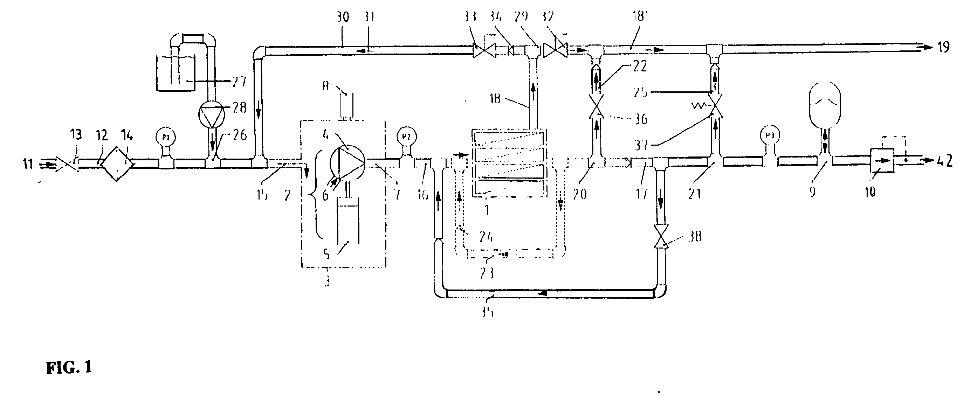

Fig. 1 shows a schematic depiction of a water purification device according to a first aspect of the invention. The water purification device comprises a filter unit 1, which for example, consists of a nanofiltration unit. Other types of filters suitable for the filtration of water may of course also be used. These may be, for example, of a reverse osmosis principle, but hyperfiltration filters and, for example, activated carbon filters may also be used. It is further possible to use combinations of these.

The figure also shows a pump unit 2, which consists of a container 3, a high-pressure pump 4, a pump drive 5. The high-pressure pump 4 is provided with an inlet opening 6 and a water outlet opening 7. A de-aerator 8 is also provided. The de-aerator 8 allows any gas present in the water and accumulating at the top of the container 3, to be released. Aeration may occur, for example, directly into the environment or alternatively to an outlet 19 so as to collect and discharge any water draining from the container during aeration.

Filtered water, so-called purified water, is fed via a purified water pipe to an expansion tank 9 for storage. In accordance with the demand for purified water, the purified water is conducted from the expansion tank to a user. This may be done via a pressure-reducing valve 10 which serves to level out the pressure to the user.

Below the working of the water purification device as shown in Fig. 1 will be explained in more detail.

Raw water having, for example, a high salinity and in addition being polluted with coarse dirt particles such as sand, etc, is fed as raw water 11 via a raw water pipe 12. The raw water is fed through an inlet valve 13 and then to a filter 14 for the removal of coarse dirt particles. After the filter 14 a pre-pressure switch P1 is provided for measuring the pressure in the raw water pipe 12. The raw water may originate, for example, from a civil water pipe system and is therefore under a pressure of several bars. When the inlet valve 13 is open, the raw water 11 will be fed via the raw water pipe 12 to the container 3. The water fed to the container 3 is referred to as feed water 15 (this will be explained below). Via the water inlet opening 6 the feed water 15 is drawn in by the pump unit 2 and fed via a feed pipe 16 to the filter unit 1. The pressure in the feed pipe 16 is controlled by means of an underpressure switch P2.

When using the installation according to the invention as shown in Fig. 1, purified water is fed through the filter and via a purified-water pipe into an expansion tank 9. Via a concentrate pipe 18, pollution retained by the filter is for a part discharged as wastewater 19 via wastewater pipe 18'. This may be discharged, for example, into a sewer.

The filtered water is discharged from the filter unit 1 via the purified-water pipe 17. Via a pressure-reducing valve 20, a pressure relief valve 21 and a pressostat P3 it flows into an expansion tank 9. The expansion tank 9 is a branch of the purified-water pipe 17. The expansion tank 9 may comprise a separate inlet and outlet for purified water to the tank and from the tank. In this way it is avoided that the purified water in the expansion tank 9 is not changed often enough.

The pressostat P3 measures the pressure in the purified-water pipe 17 and thus indirectly the pressure in the expansion tank 9. When the pressure measured by the pressostat P3 is low, it means that the water level in the expansion tank 9 is accordingly low and it will be decided that purified water has to be produced. The machine is switched on and off by means of the pressostat P3. For example, the pressostat P3 may be provided with two threshold values, e.g. a first threshold value at 3 bars and a second threshold value at 8 bars. A measured pressure equal to or lower than 3 bars will be a condition for deciding that the device is to be switched on. A measured pressure of 8 bars or higher will be the condition for deciding to switch the device off.

If, based on the pressure value measured by the pressostat P3 it is decided to switch the device on, the pre-pressure switch P1 will check whether there is sufficient pressure in the raw-water pipe 12. If the pressure is higher than a pre-set value, which is, for example, the same as the pressure provided by the water pipe system, it may be decided to switch on the high-pressure pump 4. In that case, raw water 11 will be fed via raw-water pipe 12 and the feed water pipe 15, 16 to the filter unit 1 so that via the purified-water pipe 17 purified water is fed to the expansion tank 9. The high-pressure pump 4 may continue to operate until the pressure in the expansion tank, as measured by the pressostat P3, is the same or higher than 8 bars.

The underpressure switch P2 serves to protect the filter unit 1. If the pressure falls out at the upstream side of the filter, that is to say at the feed pipe 16, the underpressure switch P2 will detect such a pressure value that is lower than the pre-set value, and will activate the pressure-reducing valve 20 so as to open. This is necessary especially when the pressure measured by P3 is higher than the pressure measured by the underpressure switch P2. A reflux of purified water through the filter unit 1 could damage the filter unit 1.

When the pressure-reducing valve 20 is opened, purified water will be fed via the intermediate pipe 22 to the wastewater pipe 18' and discharged as wastewater 19 into the sewer. This avoids damage to the filter unit 1.

It should be noted, that when switching off the pump 4, the pressure-reducing valve 20 must first be opened and then the high-pressure pump 4 switched off. This is an effective manner to avoid damage to the filter unit 1.

As shown in Fig. 1 by the dotted line, it is also possible to provide a backpressure safety bypass 23. This may comprise a mechanical safety valve 24 which will open when there is a pressure difference over the filter unit 1, i.e. a pressure that is greater at the purified water side than at the feed water side. This also provides a mechanical safeguard for the filter unit 1.

Fig. 1 also shows a safety measure for the event of the pressostat P3 being defect. If the pressostat P3 is defect and the pressure in the purified water pipe 17 becomes too high, the pressure relief valve 21 will release purified water via the intermediate pipe 25 to a wastewater pipe 18' and thus discharge it to the sewer as wastewater 19. This, too, provides an adequate safeguard for the components for the device.

In general, water supplied via the civil water pipe network contains a small amount of organic and inorganic pollution that could foul the filter unit 1. In order to avoid extensive fouling of this kind, it is possible to add an anti-foulant, as known in the art. For this purpose a dosage means 26 for anti-foulant is provided in the raw-water pipe 12. As shown, an anti-foulant container contains a quantity of anti-foulant, which is fed to the raw water in the raw-water pipe 12 by means of a metering pump 28.

In order to limit the amount of wastewater discharged, a portion of the wastewater from the filter unit 1 is returned to the raw-water pipe 12. To this end the concentrate pipe 18 is provided with a branch 29 so that on the one hand wastewater continues to be discharged via the wastewater pipe 18' into the sewer, and on the other hand another portion of the wastewater is returned via a return pipe to the raw-water pipe 12. This returned quantity of wastewater is indicated as recycling water 31. Downstream from the branch 29, the wastewater pipe 18' is provided with a regulating valve 32. Also downstream from the branch 29 the return pipe 30 is provided with a regulating valve 33. Between the branch 29 and the regulating valve 32 a reflux valve 34 may be provided. The combined raw water 11 and recycling water 31 are fed to the container 3 as feed water 15. The concentration of pollution in the feed water 15 is therefore higher than the concentration of pollution in the raw water 11.

If the entire water purification device as shown in Fig. 1 is out of operation for a particular length of time, the filter unit 1 will contain stagnant wastewater (concentrate). This concentrate 19 has a high concentration of pollution. This may cause a so-called biofilm to develop on the filters. In order to avoid this problem, a number of measures may be taken.

First, it is possible after switching off the high-pressure pump 4 to allow the feed valve 13 to remain open for some time. This causes raw water, having a lower concentration of pollution than the wastewater, to seep through the pump unit 2 and along the filters of the filter unit 1 and to subsequently drain away via the concentrate pipe 18 and the wastewater pipe 18'. As a result, the raw water at the "fouled" side of the filters of the filter unit 1 is relatively clean.

If the device according to the invention has, for example, been out of operation for one day, raw water 11 will during that time have been present at the "fouled" side of the filter unit 1. In order to completely or to a large extent, prevent the development of a biofilm in such case also, a following procedure may be carried out:
By means of a regulator (not shown) provided in the expansion tank 9, clean water is returned via the pressostat P3, the pressure relief valve 21 and the diversion 35 to the feed pipe 16 and then along the "fouled" side of the filter unit 1 to the sewer via wastewater pipe 18'. The valves 36, 37 are closed. The reflux valve 34 prevents purified water from being fed through the pipe 30 instead of through the filter unit. In this way purified water enters the filter unit 1 so that the development of a biofilm is prevented.

In such a rinsing procedure the washout valve 38 is opened.

As already mentioned, various filters may be used in practice. For example, reverse osmosis filters may be used. It is also possible, for example, to use nanofilters or ultrafilters. When using a reverse osmosis filter, the high-pressure pump 4 needs to be able to supply the necessary pressure difference of, for example, a maximum of 23 bars. This maximum value depends among other things on the type of filter and the salinity. At a greater salinity there is a smaller filtration output and a larger concentrate output. Therefore, in order to maintain the filtrate output, a greater total flow of feed water to the filter is required and thus a greater pressure difference.

In the case of an ultrafiltration, the required pressure difference is, for example, maximally 7 bars. The maximally required pressure difference for nanofilters is approximately 15 bars.

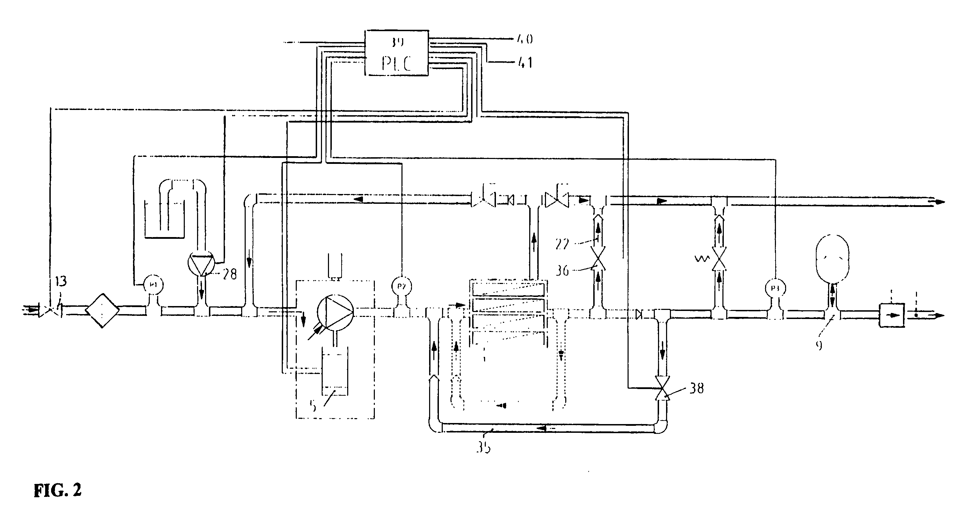

Fig. 2 shows the electrical wiring diagram for the control of the device according to Fig. 1. It is clear that the pressure switches P1, P2 and the pressostat P3 as well as the pump drive and of course the control current are connected with the in-side of the PLC. The out-side of the PLC is connected with first of all a failure lamp to indicate to a user that a failure has occurred. In addition, the out-side of the PLC is connected with a feed lamp 41, which indicates whether the control current of the installation is switched on. The out-side is also further connected with the feed valve 13, the metering pump 28 for feeding anti-foulant to the raw water, the pump drive 5, and the valve 36 in the intermediate pipe 22 and the washout valve 38 for carrying out the rinsing procedure with purified water from the expansion tank 9 to the "fouled" side of the filter unit 1.

The working of a PLC is generally known to the person skilled in the art and is not further explained at this point.

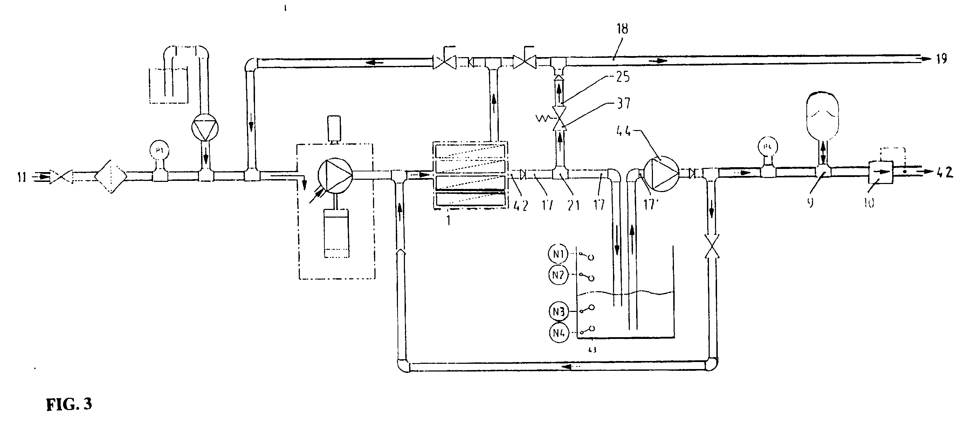

Fig. 3 shows a further embodiment of the device according to the invention. In accordance with the embodiment as shown in Fig. 3, purified water 42 is conducted from the filter unit 1 via a purified-water pipe 17 to a storage tank 43. Via a low-pressure pump 44 purified water 42 is conducted to a user, with the provision of an expansion tank 9 and a pressure reducer 10 for levelling out any possible pressure differences of the purified water 42.

The storage tank 43 is provided with two level switches N2 and N3. Level switch N2 detects a highest liquid level, while level switch N3 detects a lowest liquid level. The level switches N1 and N4 serve as safe guards, with level switch N1 serving as safeguard of a highest purified water level and level switch N4 serves as safeguard of a lowest purified water level. The pressostat P4 shown in Fig. 3 has substantially the same function as the pressostat P3 shown in Fig. 1, since the pressostat P4 measures the pressure in the purified-water pipe 17'.

The pressure relief valve 21 serves as safeguard for the event that a valve (not shown) between the pressure relief valve 21 and the storage tank 43 remains closed while purified water is being conducted from the filter unit 1 via the purified water pipe 17. In such a case the pressure relief valve 21 will ensure that purified water 42 is discharged as wastewater 19 via the intermediate pipe 25 to the wastewater pipe 18'. The intermediate pipe 25 is also provided with a valve 37. In Fig. 3 a combination of two purified-water pipes 17, 17' is depicted, wherein purified water 42 is conducted via purified-water pipe 17 into the storage tank 43, and purified water 42 is drawn from the storage tank 43 via purified-water pipe 17'. It is also possible to use a combined inlet (not shown).

If a combined inlet is provided, a low-pressure pump 44 will also be required. When no feeding takes place from the filter unit 1 to the storage tank 43, and a user requires purified water 42, purified water 42 will have to be drawn from the storage tank 43 by means of the low-pressure pump 44.

If a storage tank 43 is positioned at such height that the tap point for a user is at all times lower, preferably considerably lower than the storage tank, a low-pressure pump will probably not be required thanks to the siphon principle.

According to another aspect of the invention, a commercially available unit, also known as "booster unit", may substitute the combination of low-pressure pump 44, pressostat P4, expansion tank 9 and pressure reduction valve 10. Such a unit ensures the supply of purified water 42 to a user under controlled pressure.

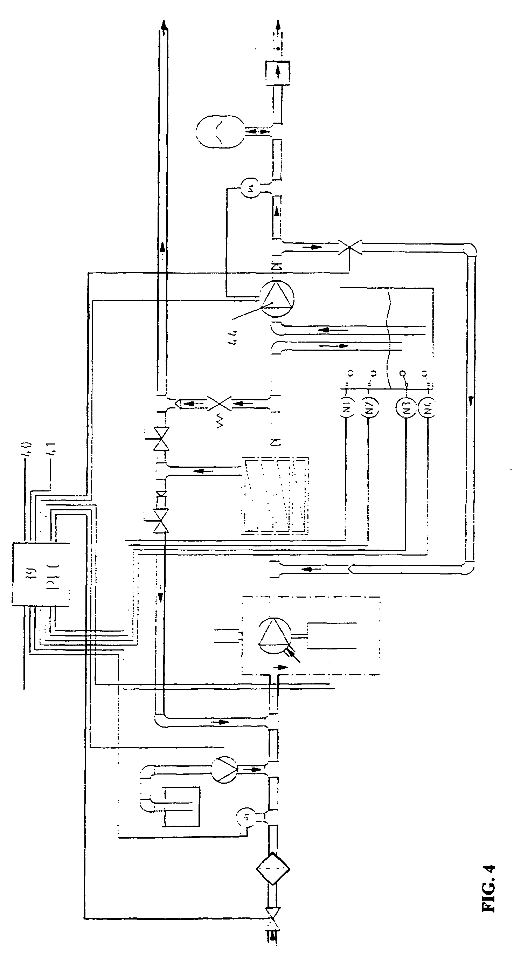

Fig. 4 shows the wiring system for connecting the respective components to a control unit 39 (a PLC). Compared with the wiring diagram shown in Fig. 2, there is the difference that no underpressure switch P2 is present, which may well be present but is not shown in the figure, and that the four level switches N1, N2, N3 and N4 are connected with the in-side of the PLC 39. Also, the pressostat P3 is in fact replaced by a pressostat P4 connected with the PLC.

Furthermore, in the present embodiment the out-side of the PLC is not connected with the valve 36, which is not present in the embodiment at hand, but with a low-pressure pump 44. The low-pressure pump is therefore included in the control system. The PLC controls the low-pressure pump 44 on the basis of the pressure in pipe 17' measured by the pressostat P4.

The remaining connections and workings are identical to those described in Fig. 2.

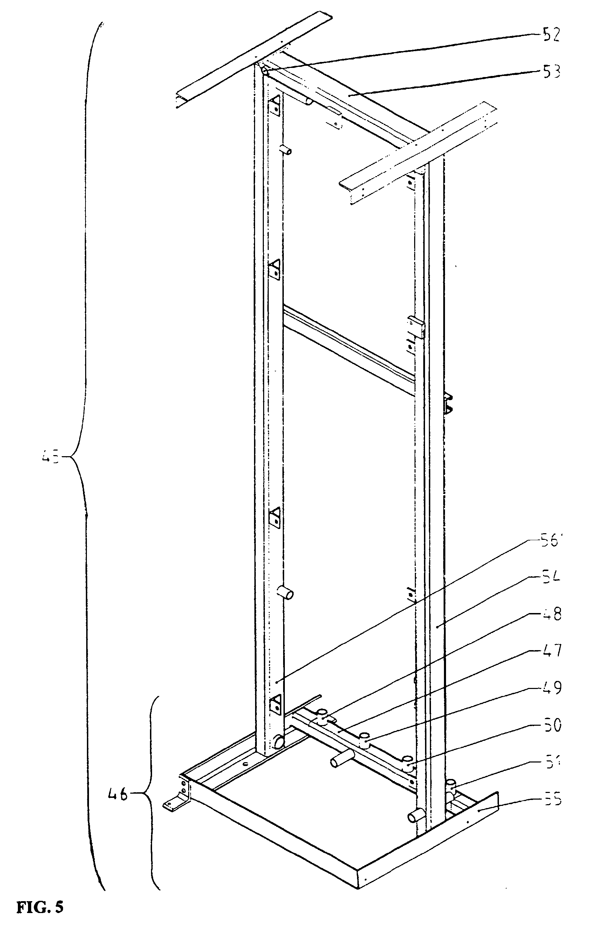

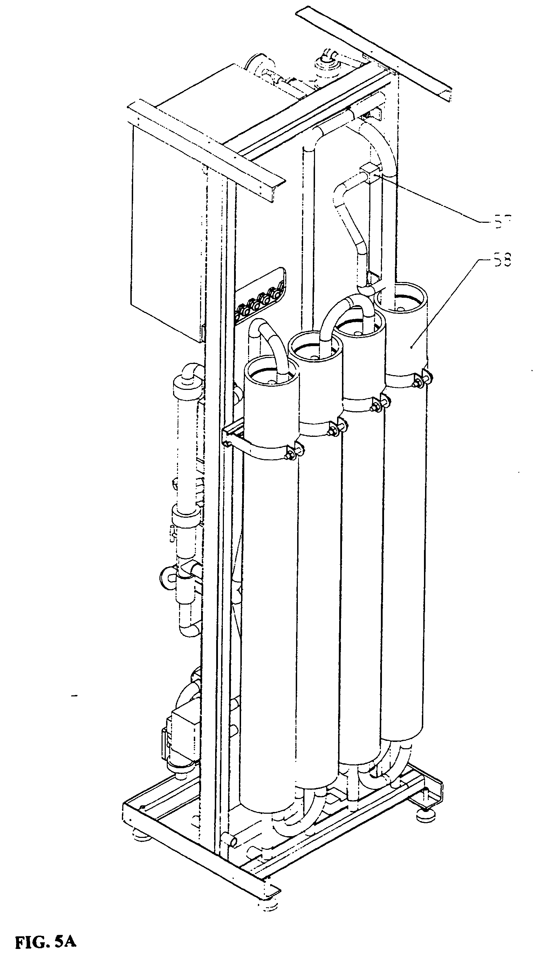

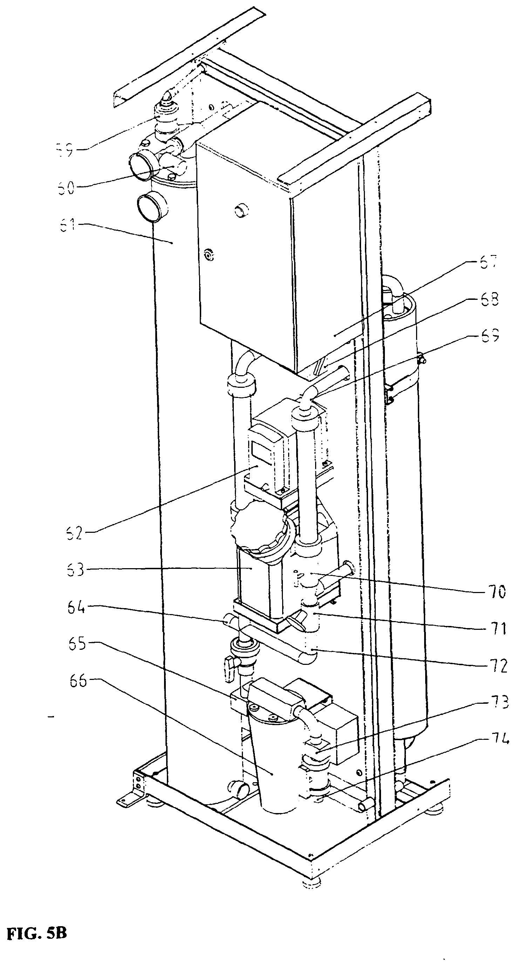

According to a third aspect of the invention the pump container 3, the filter unit 1, the storage tank 27 and the metering pump 28 for the anti-foulant, for example, as well as the various valves and switches are mounted directly or indirectly on a frame 45, which as shown in Fig. 5, is embodied at least partly as pipe system. The frame 45 comprises a lower fastening portion 46, which comprises among other things, a tube 47 suitable for discharging purified water 42. The tube 47 is therefore embodied as purified-water pipe 17 (see Fig. 1). In the present case, the frame 45 is suitable for placing four filter units by means of tubulars 48, 49, 50 and 51. In the embodiment shown in Fig. 5, the column 54' is embodied as purified-water pipe.

Fig. 5a shows a perspective view from the rear of a device for the purification of water, mounted to a frame 45 as shown in Fig. 5. In Fig. 5b a perspective view of the front of the device according to the invention is shown. As can be clearly seen, the frame portions 53 and 54 serve for the discharge of wastewater 19.

By constructing the device according to the invention such that the frame comprises pipe portions a particularly compact water purification device is obtained. It is particularly advantageous for the frame portions to be produced of a material that is resistant to the high concentrations of pollution in the wastewater.

It is also advantageous for the material of the frame portions not to give off pollutants to the filtered purified water 42.

It is further possible to provide a pH-column to which the filtered water 42 is fed. Such a pH-column can be incorporated very easily in the device. A pH-column serves to regulate the pH of the filtered water. Membrane-filtered water generally has a lower pH, a consequence of which is that construction components coming into contact with the water, may dissolve therein. This applies in particular to copper pipes and other materials that are not acid-resistant.

The invention therefore provides a water purification device wherein a pump unit is at least partly integrated in a storage vessel for feed water and wherein in accordance with a preferred embodiment, the frame of the installation is integrated with the pipe system of the installation.

With such a device according to the invention a particularly compact and economical water purification device is obtained. The overall dimensions are very modest and the heat dissipation and noise production to the environment is very low.

Surprisingly it was shown that by incorporating the pump and possibly the pump drive in the feed water to be filtered, the efficiency of the purification is improved. The performance of membrane filters as used, for example, in reversed osmosis filtration was unexpectedly shown to improve when the temperature of the water to be filtered is elevated.

It is particularly preferred for the container 3 to be closed at the top by means of a cover, for example, a lid and for the pump unit to be coupled via coupling means with the lid, e.g. by means of bolts. Since the pump unit may be immersed in its entirety in the feed water, as underwater pump unit, all the heat produced by both the pump and the drive will be dissipated to the feed water. The coupling means between the pump unit and the lid are preferably a flexible coupling. By ensuring also that the pump unit makes no further mechanical contact with the other parts of the container a very significant sound insulation is obtained.

Further, preference is given in particular to an embodiment wherein the water purification device comprises a mounting frame as shown in the Figs. 5, 5a and 5b, with elements for fastening components of the water purification device, and wherein the mounting frame comprises at least tubes that are welded together made from a concentrate-resistant material. It is especially advantageous if at least one of the tubes of the frame functions as conduit tube for the conduction of water between parts of the water purification device and/or between the water purification device and the environment, and to this end, connecting means, such as tubulars, may be provided for the watertight connection of pipe means to the tubes.

In order to afford the possibility of simply building the device according to the invention in an existing kitchen, it is preferred for the water purification device in its entirety to be dimensioned such that it fits at least into one of the module measurements of a modular kitchen interior of standard module measurements. This makes the incorporation of the water purification device into a kitchen very simple.

As mentioned above, it is therefore especially preferred for the water purification device according to the invention to comprise at least one element of the following group of elements:
a. a valve in a raw-water pipe for connecting the water purification device to a water supply system,
b. a metering device connected to a feed water pipe for the metered supply of an anti-deposition agent ("anti-foulant"),
c. a membrane-type water purification filter provided with at least a first connection for the supply of filter feed water, a second connection for the discharge of filtered water and a third connection for the discharge of concentrate,
d. in the presence of a water purification filter in accordance with c), a concentrate reflux and mixing circuit between the third connection and the water purification filter and a raw-water pipe for the return of a portion of the concentrate and for mixing the same with the raw water to form feed water for the pump,
e. a first rinsing circuit for rinsing the water purification filter with raw water via the first connection to the third connection of the water purification filter,
f. a second rinsing circuit for rinsing the water purification filter with purified water via the first connection to the third connection of the water purification filter,
g. storage means for storing under over-pressure or at atmospheric pressure a supply of purified water produced by the water purification device,
h. in the presence of storage means according to g) for under overpressure storing purified water, at least one pressostat (P3) controlled by the overpressure in the storage means, for switching the pump unit on/off,
i. in the presence of a membrane-type water purification filter according to c) and storage means according to g) for under overpressure storing purified water, means for the protection of the water purification filter against an overpressure at the side of the second connection with respect to the pressure at the side of the first connection, comprising a filter feed pressostat (P2) at the side of the first connection and a controllable pressure relief valve at the side of the second connection which, optionally via the control device mentioned in claim 16, causes the pressure relief valve to open when the pressure subceeds a pre-set threshold value,
j. in the presence of storage means according to g) for storing purified water at atmospheric pressure, at least one level switch controlled by the level of the purified water in the storage means, for switching the pump unit on/off.

It is preferred, finally, for the above-mentioned means for the protection of the water purification filter against an overpressure at the purified water side with respect to the pressure at the feed water side of the filter unit 1, to be connected with a control device, a PLC, which will switch off the device and will possibly give a failure signal by means of a failure indicator lamp 40.

## Claims

1. A method for the filtration of feed water(15) with a filtering unit (1), wherein by means of a pump unit (2), comprising a drive (5) and a pump (4) provided with a pump housing, a water inlet opening (6) and a water outlet opening (7), feed water (15) is fed through the water inlet opening (6) to the pump (4) and is fed through the pump's water outlet opening (7) to the filter unit (1) and filtered, **characterised in that** the feed water is fed to the exterior of the pump (4) for the purpose of cooling the pump (4).
which pump unit (2) is at least partly accommodated in a container (3) that is at least partly filled with feed water (15),
the feed water (15) consists at least partly of raw water (11) that is fed to the container (3), which is provided with a de-aerator (8) and the purified water is fed to expansion tank (9).

2. The method according to claim 1, **characterised in that** the pump unit (2) is at least partly immersed in, and dissipates heat to, the feed water (15).

3. A method according to claim 2, **characterised in that** any gasses, such as air, in the container are removed by said de-aerator (8).

4. A method according to one or several of the preceding claims, **characterised in that**:
the operation of the pump unit (2) is controlled by a control device (39) connected with the pump unit (2),
the raw water pressure is measured by a raw-water pressostat (P1) connected with the control device (39) and provided with a pre-set threshold value and
the pump unit (2) can be switched on when the threshold value is exceeded and switched off when the threshold value is subceeded.

5. A method according to one or several of the preceding claims, **characterised in that**:
the operation of the pump unit (2) is monitored by a control device (39) connected with the pump unit (2),
the purified water pressure is measured by a purified-water pressostat (P3) connected with the control device (39) and provided with a switch-on point at a lower discharge water pressure and a switch-off point at a higher discharge water pressure and
the pump unit (2) is switched off by the control device (39) when the threshold value of the higher purified water pressure is exceeded and switched on when the threshold value of the lower purified water pressure is subceeded.

6. A method according to one or several of the claims 1-5, **characterised in that** (2)
the operation of the pump unit (2) is monitored by a control device (39) connected with the pump unit,
the filtered water is fed into a purified water container (43), which is provided with two level sensors connected with the control device (39), which is provided with a switch-on point at a lowest purified water level and a switch-off point at a higher purified water level, and
the pump unit (2) is switched off by the control device (39) when exceeding the threshold value of the higher purified water level and switched on when subceeding the threshold value of the lowest purified water level.

7. A water purification device for the purification of raw water (11), comprising:
at least one filter unit (1) for filtering water,
one pump unit (2), comprising a drive (5) and a pump (4) provided with a water inlet opening for feeding feed water (15) to the pump (4) and a water outlet opening (7) for at elevated pressure discharging discharge water from the pump (4),
pipe means connected to the water outlet opening (7) of the pump (4) for under elevated pressure feeding discharge water from the pump (4) to the filter unit (1), and
cooling provisions for cooling the pump unit, **characterised in that** the cooling provisions for the pump unit (2) comprise provisions for externally cooling at least a part of the pump (2) unit with feed water (15) which cooling provisions further comprise a container (3), which surrounds the pump unit (2) at least partly and can at least partly be filled with feed waters (15). Said container (3) comprises de-aerator (8) whereas said device also comprises expansion tank (9) for purified water.

8. The water purification device according to claim 7, **characterised in that** the container (3) comprises a closed tank that is suitable to at least partly be filled with feed water (15).

9. The water purification device according to claim 8, **characterised in that**
raw-water pipe means (12) are present through which raw water (11) can be fed to the container (3), and
upstream from the container (3) a first filter unit (14) is present for the removal of larger dirt particles from the raw water by means of preliminary filtration of the raw water (11) in the raw-water pipe means (12).

10. The water purification device according to claim 8, **characterised in that**:
the pump unit (2) consists of an under water pump unit (2),
the pump is entirely accommodated inside the container (3), and
in the presence of feed water (15) in the container (3), the pump unit (2) is at least partly submerged in the water.

11. The water purification device according to claim 10, **characterised in that**:
the pump unit (2) consists of a plug-in pump unit (86),
the pump of the plug-in pump unit (86) is entirely accommodated inside the container, and
in the presence of feed water (15) in the container (3), the pump of the plug-in pump unit is at least partly submerged in the water.

12. The water purification device according to one of the claims 7-11**, characterised in that**:
a control device is connected with the pump unit for monitoring the same,
there is a filter feed pressostat (P2) connected with the control device, and which is in communication with the feed water pressure of the filters and which is provided with a pre-set threshold value is subceeded.

13. The water purification device according to one or several of the claims 8-12, **characterised in that**:
the container (3) has the form of a straight tube and
the pump unit (2) consists of a longitudinal underwater pump unit (2) of the axially operating multi-stage centrifugal type, fitting into the tube with radial play, or a pump portion of the plug-in pump of the axially operating multi-stage centrifugal type.

14. The water purification device according to claim 13, **characterised in that**:
the container (3) is closed at the top by means of a lid,
the pump unit (2) is coupled with the lid (79) via coupling means (76),
the pump unit (2) is an underwater pump unit,
the coupling means (76) between the pump unit (2) and the lid (79) provides a flexible coupling (76), and
otherwise the pump unit (2) makes no mechanical contact with parts of the water purification device.

15. The water purification device according to one or several of the preceding claims 7-14, **characterised in that** the water purification device in its entirety is dimensioned such that it fits at least into one of the module measurements of a modular kitchen interior of standard module measurements.

16. The water purification device according to one or several of the preceding claims 7-15, **characterised in that**
the water purification device according to the invention comprises at least one element of the following group of elements:
a. a valve in a raw-water pipe for connecting the water purification device to a water supply system,
b. a metering device connected to a feed water pipe for the metered supply of an anti-deposition agent ("anti-foulant"),
c. a membrane-type water purification filter provided with at least a first connection for the supply of filter feed water, a second connection for the discharge of filtered water and a third connection for the discharge of concentrate,
d. in the presence of a water purification filter in accordance with c), a concentrate reflux and mixing circuit between the third connection and the water purification filter and a raw-water pipe for the return of a portion of the concentrate and for mixing the same with the raw water to form feed water for the pump,
e. a first rinsing circuit for rinsing the water purification filter with raw water via the first connection to the third connection of the water purification filter,
f. a second rinsing circuit for rinsing the water purification filter with purified water via the first connection to the third connection of the water purification filter,
g. storage means for storing under over-pressure or at atmospheric pressure a supply of purified water produced by the water purification device,
h. in the presence of storage means according to g) for under overpressure storing purified water, at least one overpressure switch controlled by the overpressure in the storage means, for switching the pump unit on/off,
i. in the presence of a membrane-type water purification filter according to c) and storage means according to g) for under overpressure storing purified water, means for the protection of the water purification filter against an overpressure at the side of the second connection with respect to the pressure at the side of the first connection, comprising a filter feed pressostat (P2) at the side of the first connection and a controllable pressure relief valve at the side of the second connection which, optionally via the control device mentioned in claim 16, causes the pressure relief valve to open when the pressure drops below a pre-set threshold value,
j. in the presence of storage means according to g) for storing purified water at atmospheric pressure, at least one level switch controlled by the level of the purified water in the storage means, for switching the pump unit on/off.

17. The water purification device according to claim 16, **characterised in that** the means for the protection of the water purification filter against an overpressure at the side of the second connection with respect to the pressure at the side of the first connection are connected with a control device, which will switch off the device and if necessary give a failure signal.

## Patentansprüche

1. Verfahren zur Filtration von Speisewasser (15) mit einer Filtereinheit (1), wobei mittels einer Pumpeneinheit (2), umfassend einen Antrieb (5) und eine mit einem Pumpengehäuse ausgestattete Pumpe (4), eine Wassereinlassöffnung (6) und eine Wasserauslassöffnung (7), Speisewasser (15) durch die Wassereinlassöffnung (6) in die Pumpe (4) gespeist wird und durch die Wasserauslassöffnung (7) der Pumpe in die Filtereinheit (1) gespeist und gefiltert wird, **dadurch gekennzeichnet, dass** das Speisewasser in die Außenseite der Pumpe (4) gespeist wird zum Zweck der Kühlung der Pumpe (4), wobei
die Pumpeneinheit (2) mindestens zum Teil in einem Behälter (3) untergebracht ist, der mindestens zum Teil mit Speisewasser (15) gefüllt ist,
das Speisewasser (15) mindestens zum Teil aus Rohwasser (11) besteht, das in den Behälter (3) gespeist wird, welcher mit einem Entgaser (8) ausgestattet ist und das gereinigte Wasser in einen Ausdehnungstank (9) gespeist wird.

2. Verfahren nach Anspruch 1, **dadurch gekennzeichnet, dass** die Pumpeneinheit (2) mindestens zum Teil in das Speisewasser (15) eingetaucht ist und Wärme an dieses ableitet.

3. Verfahren nach Anspruch 2, **dadurch gekennzeichnet, dass** Gase im Behälter, wie zum Beispiel Luft, durch den Entgaser (8) entfernt werden.

4. Verfahren gemäß einem oder mehreren der vorangegangenen Ansprüche, **dadurch gekennzeichnet, dass**:
der Betrieb der Pumpeneinheit (2) von einer mit der Pumpeneinheit (2) verbundenen Steuerungsvorrichtung (39) gesteuert wird,
der Rohwasserdruck von einem mit der Steuerungsvorrichtung (39) verbundenen und mit einem voreingestellten Schwellenwert ausgestatteten Rohwasserpressostaten (P1) gemessen wird, und
die Pumpeneinheit (2) eingeschaltet werden kann, wenn der Schwellenwert überstiegen wird und ausgeschaltet werden kann, wenn der Schwellenwert unterschritten wird.

5. Verfahren gemäß einem oder mehreren der vorangegangenen Ansprüche, **dadurch gekennzeichnet, dass**:
der Betrieb der Pumpeneinheit (2) von einer mit der Pumpeneinheit (2) verbundenen Steuerungsvorrichtung (39) überwacht wird,
der Druck des gereinigten Wassers durch einen Pressostaten (P3) für gereinigtes Wasser gemessen wird, der mit der Steuerungsvorrichtung (39) verbunden ist und ausgestattet ist mit einem Einschaltpunkt bei einem niedrigeren Austrittswasserdruck und einem Abschaltpunkt bei einem höheren Austrittswasserdruck und
die Pumpeneinheit (2) von der Steuerungsvorrichtung (39) abgeschaltet wird, wenn der Schwellenwert des höheren Drucks des gereinigten Wasser überstiegen wird und eingeschaltet wird, wenn er der Schwellenwert des niedrigeren Drucks des gereinigten Wasser unterschritten wird.

6. Verfahren gemäß einem oder mehreren der Ansprüche 1 bis 5, **dadurch gekennzeichnet, dass**
der Betrieb der Pumpeneinheit (2) von einer mit der Pumpeneinheit (2) verbundenen Steuerungsvorrichtung (39) überwacht wird,
das gefilterte Wasser in einen Behälter (43) für gereinigtes Wasser gespeist wird, der mit zwei mit der Steuerungsvorrichtung (39) verbundenen Niveausensoren ausgestattet ist, welche mit einem Einschaltpunkt bei einem niedrigeren Niveau des gereinigten Wassers und einem Abschaltpunkt bei einem höheren Niveau des gereinigten Wassers ausgestattet sind, und
die Pumpeneinheit (2) von der Steuerungsvorrichtung (39) beim Übersteigen des Schwellenwerts des höheren Niveaus des gereinigten Wassers ausgeschaltet und beim Unterschreiten des Schwellenwerts des niedrigeren Niveaus des gereinigten Wassers eingeschaltet wird.

7. Wasserreinigungseinrichtung zur Reinigung von Rohwasser (11), umfassend:
mindestens eine Filtereinheit (2) zur Filtrierung von Wasser, eine Pumpeneinheit (2), umfassend einen Antrieb (5) und eine Pumpe (4), ausgestattet mit einer Wassereinlassöffnung zum Einspeisen von Speisewasser (15) in die Pumpe (4) und einer Wasserauslassöffnung (7) zum Ablassen von Auslasswasser aus der Pumpe (4) bei erhöhtem Druck,
Rohrmittel, verbunden mit der Wasserauslassöffnung (7) der Pumpe (4), um unter erhöhtem Druck Auslasswasser von der Pumpe (4) in die Filtereinheit (1) einzuspeisen, und Kühlvorkehrungen, um die Pumpeneinheit zu kühlen, **dadurch gekennzeichnet, dass** die Kühlvorkehrungen für die Pumpeneinheit (2) Vorkehrungen umfassen, um äußerlich mindestens einen Teil der Pumpeneinheit (2) mit Speisewasser (15) zu kühlen, wobei die Kühlvorkehrungen weiterhin einen Behälter (3) umfassen, der die Pumpeneinheit (2) mindestens zum Teil umgibt und mindestens zum Teil mit Speisewasser (15) gefüllt werden kann, wobei der Behälter (3) einen Entgaser (8) umfasst, wobei die Vorrichtung auch einen Ausdehnungstank (9) für gereinigtes Wasser umfasst.

8. Wasserreinigungseinrichtung nach Anspruch 7, **dadurch gekennzeichnet, dass** der Behälter (3) einen geschlossenen Tank umfasst, der geeignet ist, mindestens zum Teil mit Speisewasser (15) gefüllt zu werden.

9. Wasserreinigungseinrichtung nach Anspruch 8, **dadurch gekennzeichnet, dass**
Rohwasserrohrmittel (12) vorliegend sind, durch welche Rohwasser (11) in den Behälter gespeist werden kann (3), und flussaufwärts von dem Behälter (3) eine erste Filtereinheit (14) vorliegend ist zum Entfernen von größeren Schmutzpartikeln aus dem Rohwasser mittels vorausgehender Filtration des Rohwassers (11) in den Rohwasserrohrmitteln (12).

10. Wasserreinigungseinrichtung nach Anspruch 8, **dadurch gekennzeichnet, dass**:
die Pumpeneinheit (2) aus einer Unterwasserpumpeneinheit (2) besteht,
die Pumpe vollständig im Behälter (3) untergebracht ist, und in der Gegenwart von Speisewasser (15) im Behälter (3) die Pumpeneinheit (2) mindestens zum Teil im Wasser untergetaucht ist.

11. Wasserreinigungseinrichtung nach Anspruch 10, **dadurch gekennzeichnet, dass**:
die Pumpeneinheit (2) aus einer Steckpumpeneinheit (86) besteht,
die Pumpe der Steckpumpeneinheit (86) vollständig im Behälter untergebracht ist, und
die Pumpe der Steckpumpeneinheit in der Gegenwart von Speisewasser (15) im Behälter (3) mindestens zum Teil im Wasser untergetaucht ist.

12. Wasserreinigungseinrichtung gemäß einem der Ansprüche 7 bis 11, **dadurch gekennzeichnet, dass**:
eine Steuerungsvorrichtung mit der Pumpeneinheit verbunden ist, um dieselbe zu überwachen,
es einen Filtereinspeisungspressostaten (P2) gibt, der mit der Steuerungsvorrichtung verbundenen ist und welcher in Kommunikation mit dem Speisewasserdruck der Filter steht und welcher mit einem voreingestellten Schwellenwert ausgestattet ist.

13. Wasserreinigungseinrichtung entsprechend einem oder mehreren der Ansprüche 8 bis 12, **dadurch gekennzeichnet, dass**:
der Behälter (3) die Form eines geraden Rohrs aufweist und die Pumpeneinheit (2) aus einer longitudinalen Unterwasserpumpeneinheit (2) vom Typ der axial arbeitenden mehrstufigen zentrifugalen Art besteht und mit radialem Spiel in das Rohr passt, oder einem Pumpenteil der Steckpumpe vom Typ der axial arbeitenden mehrstufigen zentrifugalen Art.

14. Wasserreinigungseinrichtung nach Anspruch 13, **dadurch gekennzeichnet, dass**:
der Behälter (3) am oberen Ende mittels eines Deckels geschlossen ist,
die Pumpeneinheit (2) mittels Verbindungsmitteln (76) mit dem Deckel (79) verbunden ist,
die Pumpeneinheit (2) eine Unterwasserpumpeneinheit ist,
die Verbindungsmittel (76) zwischen der Pumpeneinheit (2) und dem Deckel eine flexible Verbindung (76) zur Verfügung stellen, und
die Pumpeneinheit (2) sonst keinen mechanischen Kontakt mit Teilen der Wasserreinigungseinrichtung herstellt.

15. Wasserreinigungseinrichtung entsprechend einem oder mehreren der vorangegangenen Ansprüche 7 bis 14, **dadurch gekennzeichnet, dass** die Wasserreinigungseinrichtung in ihrer Gesamtheit so dimensioniert ist, dass sie mindestens in eine der Modulabmessungen einer modularen Kücheneinrichtung mit Standardmodulabmessungen passt.

16. Wasserreinigungseinrichtung entsprechend einem oder mehreren der vorangegangenen Ansprüche 7 bis 15, **dadurch gekennzeichnet, dass**:
die Wasserreinigungseinrichtung entsprechend der Erfindung mindestens ein Element der folgenden Gruppe von Elementen umfasst:
a. ein Ventil in einem Rohwasserrohr zur Verbindung der Wasserreinigungseinrichtung mit einer Wasserversorgungsanordnung,
b. eine mit einem Speisewasserrohr verbundene Dosierungsvorrichtung zur dosierten Versorgung mit einem Antiablagerungsagens ("Fäulnisverhinderungsmittel"),
c. ein Wasserreinigungsfilter vom Membrantyp, ausgestattet mit mindestens einer ersten Verbindung zur Versorgung mit Filterspeisewasser, einer zweiten Verbindung zum Ablassen des gefilterten Wassers und einer dritten Verbindung zum Ablassen eines Konzentrats,
d. in der Gegenwart eines Wasserreinigungsfilters gemäß c) einen Konzentratrückfluss- und Mischkreislauf zwischen der dritten Verbindung und dem Wasserreinigungsfilter und ein Rohwasserrohr zur Rückführung eines Teils des Konzentrats und zur Mischung desselben mit dem Rohwasser, um Speisewasser für die Pumpe auszuformen,
e. einen ersten Spülkreislauf zum Spülen des Wasserreinigungsfilters mit Rohwasser über die erste Verbindung zur dritten Verbindung des Wasserreinigungsfilters,
f. einen zweiten Spülkreislauf zum Spülen des Wasserreinigungsfilters mit gereinigtem Wasser über die erste Verbindung zur dritten Verbindung des Wasserreinigungsfilters,
g. Speichermittel, um unter Überdruck oder bei atmosphärischem Druck einen Vorrat von mit der Wasserreinigungseinrichtung erzeugtem gereinigtem Wasser zu speichern,
h. in der Gegenwart des Speichermittels gemäß g) zur Speicherung von gereinigtem Wasser unter Überdruck mindestens ein durch den Überdruck im Speichermittel gesteuerten Überdruckschalter, um die Pumpeneinheit ein- und auszuschalten,
i. in der Gegenwart eines Wasserreinigungsfilters vom Membrantyp gemäß c) und Speichermittels gemäß g) zur Speicherung von gereinigtem Wasser unter Überdruck ein Mittel für den Schutz des Wasserreinigungsfilters vor einem Überdruck auf der Seite der zweiten Verbindung in Bezug auf den Druck auf der Seite der ersten Verbindung, das einen Filterpressostaten (P2) auf der Seite der ersten Verbindung und ein steuerbares Druckentlastungsventil auf der Seite der zweiten Verbindung umfasst, der, wahlweise über die in Anspruch 16 erwähnte Steuerungsvorrichtung, bewirkt, dass sich das Druckentlastungsventil öffnet, wenn der Druck unter einen voreingestellten Schwellenwert fällt,
j. in der Gegenwart von Speichermitteln gemäß g) zum Speichern des gereinigten Wassers bei atmosphärischem Druck mindestens einen durch das Niveau des gereinigten Wassers im Speichermittel gesteuerten Niveauschalter zum Ein- und Ausschalten der Pumpeneinheit.

17. Wasserreinigungseinrichtung nach Anspruch 16, **dadurch gekennzeichnet, dass** die Mittel für den Schutz des Wasserreinigungsfilters vor einem Überdruck auf der Seite der zweiten Verbindung in Bezug auf den Druck auf der Seite der ersten Verbindung mit einer Steuerungsvorrichtung verbunden sind, die die Vorrichtung ausschaltet und, wenn notwendig, ein Fehlersignal ausgibt.

## Revendications

1. Procédé pour la filtration d'eau d'alimentation (15) avec une unité de filtration (1), dans lequel, au moyen d'une unité à pompe (2), comportant un moyen d'entraînement (5) et une pompe (4) pourvue d'un corps de pompe, d'une ouverture (6) d'entrée d'eau et d'une ouverture (7) de sortie d'eau, de l'eau d'alimentation (15) est amenée à travers l'ouverture (6) d'entrée d'eau à la pompe (4) et est amenée à travers l'ouverture (7) de sortie d'eau de la pompe à l'unité de filtration (1) et filtrée, **caractérisé en ce que** l'eau d'alimentation est amenée sur l'extérieur de la pompe (4) afin de refroidir la pompe (4), laquelle unité à pompe (2) est logée au moins partiellement dans un conteneur (3) qui est rempli au moins partiellement d'eau d'alimentation (15),
l'eau d'alimentation (15) étant constituée au moins partiellement d'eau brute (11) qui est amenée au conteneur (3), lequel est pourvu d'un désaérateur (8) et l'eau purifiée est amenée à un vase d'expansion (9).

2. Procédé selon la revendication 1, **caractérisé en ce que** l'unité à pompe (2) est immergée au moins partiellement dans l'eau d'alimentation (15) et dissipe de la chaleur vers celle-ci.

3. Procédé selon la revendication 2, **caractérisé en ce que** tous gaz, tels que de l'air, se trouvant dans le conteneur sont éliminés par ledit désaérateur (8).

4. Procédé selon une ou plusieurs des revendications précédentes, **caractérisé en ce que** :
le fonctionnement de l'unité à pompe (2) est commandé par un dispositif de commande (39) relié à l'unité à pompe (2),
la pression de l'eau brute est mesurée par un pressostat (P1) d'eau brute relié au dispositif de commande (39) et pourvu d'une valeur de seuil préétablie, et
l'unité à pompe (2) peut être mise en marche lorsque la valeur de seuil est dépassée et arrêtée lorsque la valeur de seuil n'est pas atteinte.

5. Procédé selon une ou plusieurs des revendications précédentes, **caractérisé en ce que** :
le fonctionnement de l'unité à pompe (2) est contrôlé par un dispositif de commande (39) relié à l'unité à pompe (2),
la pression d'eau purifiée est mesurée par un pressostat (P3) d'eau purifiée relié au dispositif de commande (39) et pourvu d'un point d'activation à une pression d'eau de décharge inférieure et d'un point de désactivation à une pression d'eau de décharge supérieure, et
l'unité à pompe (2) est arrêtée par le dispositif de commande (39) lorsque la valeur de seuil de la pression supérieure de l'eau purifiée est dépassée et est mise en marche lorsque la valeur de seuil de la pression inférieure d'eau purifiée n'est pas atteinte.

6. Procédé selon une ou plusieurs des revendications 1 à 5, **caractérisé en ce que** :
le fonctionnement de l'unité à pompe (2) est contrôlé par un dispositif de commande (39) relié à l'unité à pompe (2),
l'eau filtrée est introduite dans un conteneur (43) d'eau purifiée, qui est pourvu de deux capteurs de niveau reliés au dispositif de commande (39), lequel est pourvu d'un point d'activation au niveau le plus bas de l'eau purifiée et d'un point de désactivation à un niveau plus élevé de l'eau purifiée, et
l'unité à pompe (2) est arrêtée par le dispositif de commande (39) lors d'un dépassement de la valeur de seuil du niveau plus élevé d'eau purifiée et est mise en marche lorsque la valeur de seuil du niveau le plus bas de l'eau purifiée n'est pas atteinte.

7. Dispositif de purification de l'eau pour la purification d'eau brute (11), comportant :
au moins une unité à filtre (1) pour la filtration de l'eau,
une unité à pompe (2), comportant un moyen d'entraînement (5) et une pompe (4) pourvue d'une ouverture d'entrée d'eau pour amener de l'eau d'alimentation (15) à la pompe (4) et d'une ouverture (7) de sortie d'eau pour décharger de l'eau de décharge à pression élevée depuis la pompe (4),
un moyen de canalisation relié à l'ouverture (7) de sortie d'eau de la pompe (4) pour amener, sous pression élevée, de l'eau de décharge de la pompe (4) à l'unité de filtration (1), et
des moyens de refroidissement pour refroidir l'unité à pompe,
**caractérisé en ce que** les moyens de refroidissement pour l'unité à pompe (2) comprennent des moyens pour refroidir extérieurement au moins une partie de l'unité à pompe (2) avec de l'eau d'alimentation (15), lesquels moyens de refroidissement comprennent en outre un conteneur (3), qui entoure l'unité à pompe (2) au moins partiellement et qui peut être rempli au moins partiellement d'eau d'alimentation (15), ledit conteneur (3) comportant un désaérateur (8) alors que ledit dispositif comporte aussi un vase d'expansion (9) pour l'eau purifiée.

8. Dispositif de purification de l'eau selon la revendication 7, **caractérisé en ce que** le conteneur (3) comporte un réservoir fermé qui est apte à être rempli au moins partiellement d'eau d'alimentation (15).

9. Dispositif de purification de l'eau selon la revendication 8, **caractérisé en ce que**
des moyens (12) de canalisation d'eau brute sont présents par lesquels de l'eau brute (11) peut être amenée au conteneur (3), et
en amont du conteneur (3), une première unité à filtre (14) est présente pour éliminer de l'eau brute des particules de saleté relativement grosses au moyen d'une filtration préliminaire de l'eau brute (11) dans les moyens (12) de canalisation d'eau brute.

10. Dispositif de purification de l'eau selon la revendication 8, **caractérisé en ce que** :
l'unité à pompe (2) consiste en une unité à pompe immergée (2),
la pompe est entièrement logée à l'intérieur du conteneur (3), et
en présence d'eau d'alimentation (15) dans le conteneur (3), l'unité à pompe (2) est au moins partiellement immergée dans l'eau.

11. Dispositif de purification de l'eau selon la revendication 10, **caractérisé en ce que** :
l'unité à pompe (2) consiste en une unité à pompe raccordable (86),
la pompe de l'unité à pompe raccordable (86) est entièrement logée à l'intérieur du conteneur, et
en présence d'eau d'alimentation (15) dans le conteneur (3), la pompe de l'unité à pompe raccordable est au moins partiellement dans l'eau.

12. Dispositif de purification de l'eau selon l'une des revendications 7 à 11, **caractérisé en ce que** :
un dispositif de commande est relié à l'unité à pompe pour la contrôler,
un pressostat (P2) d'alimentation du filtre est connecté au dispositif de commande, et est en communication avec la pression d'eau d'alimentation des filtres et est pourvu d'une valeur de seuil préétablie.

13. Dispositif de purification de l'eau selon une ou plusieurs des revendications 8 à 12, **caractérisé en ce que** :
le conteneur (3) a la forme d'un tube droit, et
l'unité à pompe (2) consiste en une unité à pompe longitudinale (2) sous l'eau du type centrifuge à étages multiples à action axiale, s'ajustant dans le tube avec du jeu radial, ou une partie de pompe de la pompe raccordable du type centrifuge à étage multiples à action axiale.

14. Dispositif de purification de l'eau selon la revendication 13, **caractérisé en ce que**:
le conteneur (3) est fermé au sommet au moyen d'un couvercle,
l'unité à pompe (2) est raccordée au couvercle (79) par un moyen de raccordement (76),
l'unité à pompe (2) est une unité à pompe sous l'eau,
le moyen de raccordement (76) entre l'unité à pompe (2) et le couvercle (79) réalise un raccordement flexible (76), et
l'unité à pompe (2) n'établit autrement aucun contact mécanique avec des parties du dispositif de purification de l'eau.

15. Dispositif de purification de l'eau selon une ou plusieurs des revendications précédentes 7 à 14, **caractérisé en ce que** le dispositif de purification de l'eau dans sa totalité est dimensionné de façon à s'adapter à au moins l'une des mesures de module d'un intérieur de cuisine modulaire de mesures de module normalisées.

16. Dispositif de purification de l'eau selon une ou plusieurs des revendications précédentes 7 à 15, **caractérisé en ce que** :
le dispositif de purification selon l'invention comporte au moins un élément du groupe d'éléments suivants :
a. un robinet d'un conduit d'eau brute pour raccorder le dispositif de purification de l'eau à un système d'alimentation en eau,
b. un dispositif de dosage raccordé à un conduit d'eau d'alimentation pour la fourniture dosée d'un agent anti-déposition ("anti-salissures"),
c. un filtre de purification de l'eau du type à membrane pourvu d'au moins un premier raccord pour la fourniture d'eau d'alimentation du filtre, d'un deuxième raccord pour la décharge de l'eau filtrée et d'un troisième raccord pour la décharge de concentré,
d. en présence d'un filtre de purification de l'eau conforme à c), un circuit de reflux et de mélange de concentrés entre le troisième raccord et le filtre de purification de l'eau et un conduit d'eau brute pour le retour d'une portion du concentré et pour son mélange à l'eau brute afin de former de l'eau d'alimentation pour la pompe,
e. un premier circuit de rinçage pour rincer le filtre de purification de l'eau avec de l'eau brute en passant par le premier raccord jusqu'au troisième raccord du filtre de purification de l'eau,
f. un second circuit de rinçage pour le rinçage du filtre de purification de l'eau avec de l'eau purifiée en passant par le premier raccord jusqu'au troisième raccord du filtre de purification de l'eau,
g. un moyen d'emmagasinage destiné à emmagasiner en surpression ou à la pression atmosphérique une réserve d'eau purifiée produite par le dispositif de purification d'eau,
h. en présence du moyen d'emmagasinage selon g) pour l'emmagasinage en surpression d'eau purifiée, au moins un interrupteur à surpression commandé par la surpression dans le moyen d'emmagasinage, pour mettre en marche/arrêter l'unité à pompe,
i. en présence d'un filtre de purification de l'eau du type à membrane selon c), et d'un moyen d'emmagasinage selon g), pour l'emmagasinage en surpression de l'eau purifiée, d'un moyen pour la protection du filtre de purification de l'eau contre une surpression du côté du deuxième raccord par rapport à la pression du côté du premier raccord, comportant un pressostat (P2) d'alimentation du filtre du côté du premier raccord et une soupape de décharge à pression réglable du côté du deuxième raccord qui, facultativement par l'intermédiaire du dispositif de commande mentionné dans la revendication 16, provoque l'ouverture de la soupape de décharge de pression lorsque la pression chute en-dessous d'une valeur de seuil préétablie,
j. en présence du moyen d'emmagasinage selon g) pour l'emmagasinage d'eau purifiée à la pression atmosphérique, au moins un interrupteur à niveau commandé par le niveau de l'eau purifiée dans le moyen d'emmagasinage, pour mettre en marche/arrêter l'unité à pompe.

17. Dispositif de purification de l'eau selon la revendication 16, **caractérisé en ce que** les moyens pour protéger le filtre de purification de l'eau contre une surpression du côté du deuxième raccord par rapport à la pression du côté du premier raccord sont connectés à un dispositif de commande, lequel arrête le dispositif et, si nécessaire, produit un signal de défaillance.
